# EUROPEAN PATENT APPLICATION

(11) **EP 1 739 913 A1**
(43) Date of publication of application: **03.01.2007**
(21) Application number: 05292290.3
(22) Date of filing: 27.10.2005
(51) Int. Cl.: H04L 29/00, G06F 21/00, H04L 29/06

(54) **DRM system for devices communicating with portable device.**

(30) Priority: 20.05.2005 EP 05291097
(71) Applicant: Axalto SA, 92120 Montrouge (FR)
(72) Inventor: Mahalal, llan c/o Axalto S.A. Int.Prop.Dept., 92190 Meudon (FR); Tales, Alain Axalto S.A. Int. Prop. Dept., 92190 Meudon (FR)
(74) Representative: Jacquot, Ludovic R. G.

(57) **Abstract**

The invention relates to a personal token (15) for access to a telecommunication network, such as a SIM card, said personal token (15) storing an entity which is able to deliver to a rendering device (10) associated with said token a rights objects, said rights object comprising at least a decryption key and at least a usage right for the digital content

## Description

### BACKGROUND OF THE INVENTION

The present invention generally relates to Digital Rights Management (DRM) in rendering devices communicating with portable devices or personal tokens such as smart cards, USB authentication tokens, MMC secure tokens, etc , i.e. tokens which are intended to be associated with another device and which implement security functions for allowing personal access to content of such token or to a network, or even to a restricted access area.

The invention can equally apply to any device acting as a device rendering the digital content to a user, such as a PDA, a PC, or a consumer electronics device with multimedia rendering capabilities.

The invention relates more specifically to a mechanism that allows to be sure that conditions for access to digital content by a rendering device are enforced.

"Digital Rights Management" (DRM) is a set of technologies that provides the means to control the distribution and consumption of the digital media and other digital content. It allows content providers to define usage rights to the content.

Usage rights define how a content is to be used, i.e. the manner in which a content can be accessed.

Examples for such usage rights are "the content may only be rendered if it has not yet been rendered more than x times" or "the content may be rendered if the current date is between day y and day z".

A DRM system enables "Content Issuers" to distribute protected content and "Rights Issuers" to issue to a user some rights objects comprising the usage rights to the delivered protected media.

The protection of the content is usually achieved by encryption. The decryption key or any other information necessary to access the content is also comprised by the rights objects.

Most DRM systems rely on trusted hardware. While protected (encrypted) content may be freely distributed, rights objects comprising the information necessary to access the content (e.g. the decryption keys) are only delivered to devices which are believed to be "DRM compliant", which means that (1) the device accesses the content only if the access is covered by the usage rights comprised by the rights object, and (2) content cannot be extracted from the device and distributed to others in unprotected form, e.g. decrypted.

A DRM compliant device typically includes a piece of software which is called a DRM agent, whose role is to decrypt the protected content with the key delivered from the rights object, and to ensure that the usage rights defined in the rights object are not outpassed.

Smart cards are intrinsically secure computing platforms ideally suited for providing enhanced security and privacy functionality to applications. At the same time, they provide an isolated processing facility capable of using this information without exposing it within the host environment.

There is a growing need for DRM systems in the mobile industry to enable operators and content providers to make digital content available to consumers in a controlled manner. The handset may already be connected to a smart card like a SIM (Subscriber Identity Module) used in GSM.

In some DRM solutions that apply to mobile handsets, i.e. OMA (Open Mobile Alliance) DRM, a Rights Issuer can authenticate a handset as DRM compliant and then deliver rights objects to the handset. The rights objects then are stored and managed on the handset.

A Rights Issuer is implemented as a remote server to which the user connects with his DRM compliant handset. The Rights Issuer server and the user device may use a DRM specific protocol for mutual authentication and then Rights Objects are delivered to the user's handset. A DRM Agent in the handset uses these Rights Objects to derive execution rights for media or application that the user downloaded and paid for.

Within current DRM solutions, rights objects are associated with a device (the handset), and not with a user. This means that if the user changes handset he has to ask the Rights Issuer to install the rights objects again - on the new device.

The invention aims at proposing a more reliable way of protecting a digital content while allowing users to make an easier use of such digital content.

Such purpose is attained according to the invention by means of the features which are recited in the claims,

Other purposes and aspects of the invention will appear through the following description, which is made with reference to the drawings, among which :

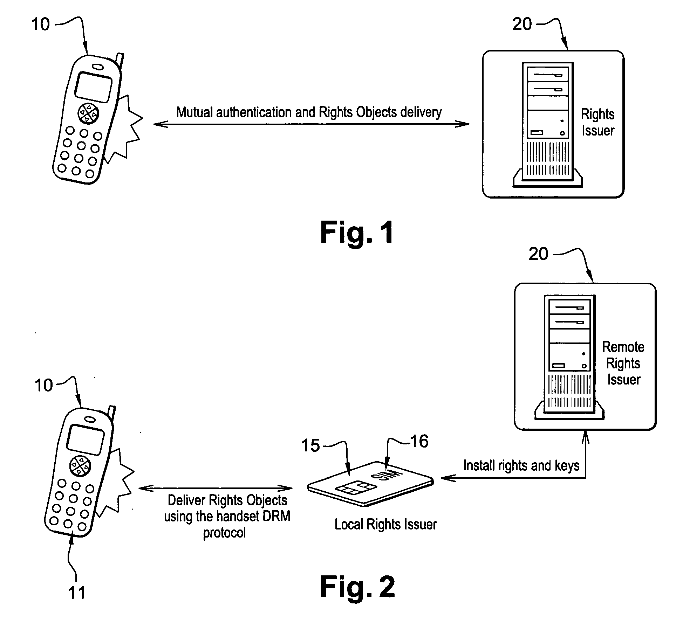

Figure 1 depicts a digital rights management system according to prior art,
Figure 2 depicts a digital rights management system according to the invention,
Figure 3 is a functional flowchart which illustrates partly how the invention is preferably implemented in the case of protected broadcast,
Figure 4 depicts a digital rights management system according to the invention in the case of broadcasted protected digital content.

The following example shows a scenario with a DRM compliant mobile handset 10 with a smart card 15 carried in said mobile handset.

According to prior art, the user downloads media and applications to his handset 10 and then connects to a remote Rights Issuer 20 to buy execution rights. For example, the user downloaded protected audio files and wants to acquire the rights to play them. The downloaded Rights Object will also contain the decryption keys that will allow a DRM agent in the handset to decrypt the content and then play it.
Presently, the remote Rights Issuer 20 can deliver the Rights Object in two different ways:
Either deliver a protected Rights Object that the handset 10 cannot directly use but needs to install in the personal token 15, or deliver the Rights Object directly to the personal token 15 by means of a standard or proprietary end to end secure protocol between the two.

It has to be understood that the present personal token 15 is a token which has for primary role to allow access to the mobile telephony network i.e. a SIM card in the present example. Such token 15 therefore implements both the access to such network, and the presently described DRM functionality.

The invention is not limited to telephony network authentication tokens, but can be applied to any type of other token for access to a telecommunication network, for example to a personal token for access to some particular networks on the internet, of personal tokens for PDAs in a network for mobile intemet.

Implementing these both functionalities on the same token provides the main advantage of personalizing the way the rights objects are carried by the end-user, ensuring that the DRM functionalities are present with the user independently of the handset 10 the token 15 is placed in.

The user transports his rights objects with his personal token 15 from handset to handset, without having to worry about this aspect, as though the personal token 15 was a rudimentary personal token,

Once the Rights Objects are delivered to the personal token 15 the user's handset can connect to a Rights Issuer server 16 which is implemented in the personal token 15 and get the Rights Objects in the format that can be interpreted by a DRM agent 11 which is present in the handset 10.

The server word in the present example will mean that the personal token 15 stores a software entity which is able to perform an authentication of the handset 20 as a DRM compliant handset, for example through comparing an identifying parameter of the handset 20 with a pre-memorized list of compliant devices in the personal token 15. Such authentication is typically made through an authenticating protocol which is specific to DRM.

Such DRM protocol is the same in the present example as it is between a DRM compliant handset and a remote Rights Issuer, but the exchanges between the handset 10 and the personal token 15 are performed in the present example by encapsulating such exchanges in usual APDU instructions.

The rights issuer server 16 in the personal token 15 then supplies the necessary rights object to the handset 10 in the same way as the rights objects would be acquired from a remote server and the handset 10 becomes entitled to decrypt the content with the key contained in the rights object, in the frame of the usage rights contained also in the rights object, and that the DRM agent 11 in the handset 10 abides to, reliably so thanks to the fact that the handset 10 is a DRM compliant and therefore entrusted rendering device.

In a broadcast mode environment, when a user subscribes to a broadcast service, a rights object containing the authorization to access the service is issued by the remote right issuer 20 to the user.

Whenever the content is going to be broadcasted to the handset 10 using technology such as DVB-H, t-DMB, S-DMB, DAB or any other type of broadcasting technology, the DRM architecture will require a three layer cryptographic architecture as opposed to two layer used in a point to point distribution mode.

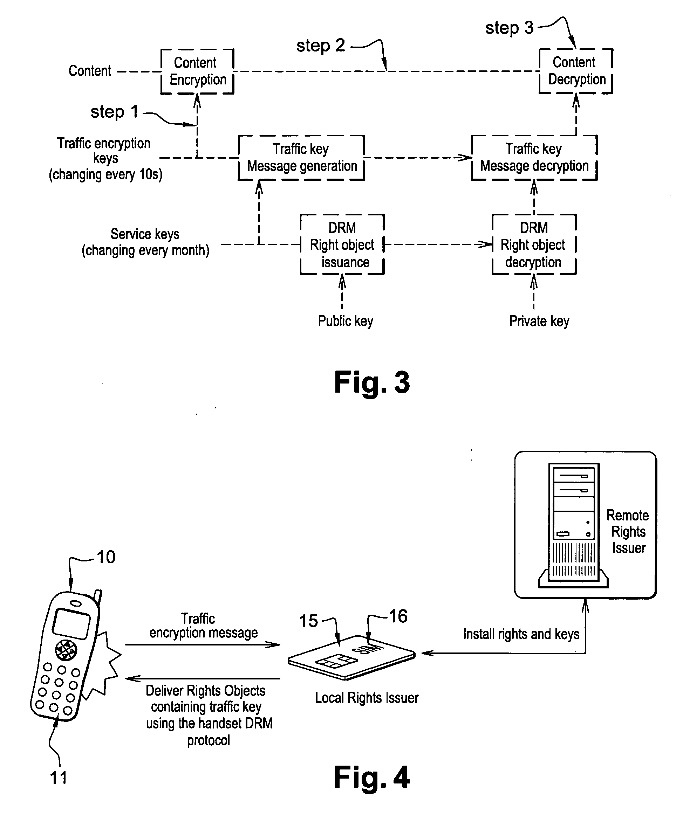

The content is encrypted with traffic keys (step 1 on figure 3). These traffic keys are delivered with the broadcasted content through encrypted "traffic encryption messages" (step 2).

The traffic encryption messages as they arrive are transferred to the personal token 15.

If the personal token 15 has the rights object giving access to the service, the right issuer server 16 in the personal token 15 issues to the handset 10 a rights object containing the traffic key in the format that can be interpreted by its DRM agent, together with the usage rights attached with such broadcasted content, for example "decrypt only if the date is between date x and date y".

The rendering deivice is therefore able to decrypt the content with the decrypted traffic key as provided together with the usage rights in the rights object (step 3).

Since the personal token 15 usually is personalized, the rights objects can be associated directly with the user identity. Portability of the rights objects when using other handsets is facilitated.

Furthermore, if the personal token 15 is hacked, a new generation of tokens, here of smart cards, with new security features can be deployed very rapidly, for little extra costs. It is far cheaper to replace the smart card than to replace the handset.

The diversity of existing DRM solutions forces a Rights Issuer to implement most of them. If a user buys execution rights for several different handsets that he owns they may be managed by different DRM solutions even though it's the same user who bought them.

The solution for the above problems is to implement one or several Rights Issuer micro servers within the personal token 15 itself and not as a remote full-blown server on the network. A local micro Rights Issuer such as server 16 within the personal token 15 needs to manage only the Rights for a single user and not for million of users, as a real network Rights Issuer server would,

The local Rights Issuer 16 within the personal token 15 is storing all the Rights Objects that the user acquired for one or several of his handsets 10 or DRM compliant devices. The format of the Rights Objects stored in the personal token may be proprietary or standard but the local Rights Issuer within the personal token will transform them to a standard format that the user's handset need before delivering them to it. This means that the local Rights Issuer 16 within the personal token 15 may implement several DRM protocols and be capable to deliver to the Rights Object format that a given handset needs.

This solution solves the issue of Rights Objects portability between devices since all the user's rights objects are now stored within the personal token 15 and are delivered locally to the user's handsets or DRM compliant devices. When the user changes his handset 10 he does not need to connect to a remote Rights Issuer server 20 and ask that his acquired Rights objects be delivered to the new device. The Rights objects are delivered locally to the user's new handset with the standard protocol that the new handset implements.

Several usage rights may be expressed in the delivered Rights Objects that are derived from the initial Rights Objects that are stored within the personal token 15.

Some usage rights of the rights object may edict the following constraints.

The delivered Rights Object is valid only if the personal token is connected to the DRM compliant device to which the Rights Objects are intended to be delivered. This ensures that the user will not be able to install execution rights in handsets that do not belong to him and that they stay valid when he removes the personal token from them. The connection between the devices may be a wired or wireless connection.

Another usage right may be that the delivered Rights Object is valid for only one execution of the media in the handset and then a new Rights Object needs to be requested. This is useful when the initial Rights Object stored in the personal token allows N executions but the execution counter is implemented internally within the personal token. Each time that the personal token delivers a Rights Object to the handset it decrement the executions counter internally. This ensures a complete portability of counter based rights across all the user's handsets or DRM complaint devices.

Another usage right may be that the delivered Rights Object may be valid for only a limited time slot (e.g. 1 minutes) and then a new Rights Object needs to be requested. This is useful when the initial Rights Object stored in the personal token allows execution rights for a broadcast video for example. This ensures that the personal token is connected to the handset all the time and also enable the delivery of different decryptions keys for each time slot.

Advantageously, the Rights Issuer server implemented in the personal token is managed over the air with proprietary or standard secure protocols.

In a preferred embodiment, the Rights Issuer server implemented in the personal token generates Rights Objects based on other initial Rights Objects, or authorization data, that were delivered to it from a remote Rights Issuer server or authorization server.

Advantageously, the Rights Issuer server implemented in the personal token and the remote Rights Issuer or authorization server can mutually authenticate each other end to end.

Preferably, the Rights Issuer server implemented in the personal token manages counter based Rights Objects by delivering several Rights Objects, each enabling only one execution on the rendering device, and then decrementing a counter in the personal token upon the delivery of each Rights Object to the rendering device, until the counter is set to zero.

In a preferred embodiment, the Rights Issuer server implemented in the personal token delivers a series of Rights Objects to the rendering device, each being valid for a limited time frame.

Advantageously, the Rights Object delivered by the Rights Issuer server implemented in the personal token indicates that another Rights Object can be subsequently delivered after the expiration of the delivered one.

In a preferred embodiment, the Rights Issuer server implemented in the personal token enables a secure backup of all its Rights Objects, or authorization data, on a local PC or a remote server by exporting this data encrypted by credentials that are securely stored in the personal token.

Preferably, the Rights Issuer server implemented in the personal token simultaneously delivers Rights Objects to several rendering device if a wired or wireless link can be established with all at the same time.

## Claims

1. A method for rendering a protected digital content to a user, said method comprising:
a. Providing a rendering device (10) which comprises a DRM agent (11) and which is able to be associated with a personal token (15) for access to a telecommunication network, such as a SIM card,
b. Providing a personal token (15),
c. Storing in said personal token (15) a rights object and delivering such rights object to the rendering device, said rights object comprising at least a decryption key and at least a usage right for the digital content.

2. The method according to claim 1, **characterized in** the personal token (15) is an authentication token for a mobile telephony network.

3. The method according to claim 1, **characterized in that** the rendering device (10) is a handset in a mobile telephony network.

4. The method according to claim 1, **characterized in that** the decrypting key is a traffic key.

5. The method according to claim 4, **characterized in that** it comprises the step which consists in downloading an encrypted traffic key from a remote server (20) together with a digital content encrypted with said traffic key, the step which consists in decrypting the traffic key in the personal token and the step consisting in delivering the decrypted traffic key to the rendering device once said traffic key has been decrypted, as the decrypting key of the content.

6. The method according to claim 1, **characterized in that** the personal token (15) implements several DRM sever protocols so as to deliver rights objects pertaining to a different DRM standards which correspond to different types of DRM compliant rendering devices.

7. The method according to the preceding claim, **characterized in that** the personal token (15) stores a plurality of rights objects, each pertaining to a different DRM protocol which corresponds to a different type of DRM compliant rendering device (10).

8. The method according to claim 6, **characterized in that** the personal token stores a transcribing entity which transcribes a rights object in anyone of a plurality of DRM protocols before such rights object is transmitted to the rendering device (10).

9. The method as recited in the claim 1 **characterized in that** the Rights Issuer server implemented in the personal token authenticates the rendering device as pertaining to a pre-established list of rendering devices (10) before delivering a rights object to said rendering device.

10. The method as recited in the claim 1, **characterized in that** the Rights Objects delivered by the Rights Issuer server implemented in the personal token (15) indicate that execution rights are valid only if the portable device is currently connected to the rendering device (10) in a wired or wireless manner.

11. The method as recited in the claim 1, **characterized in that** the personal token comprises a Rights Issuer server which is managed over the air with proprietary or standard secure protocols,

12. The method as recited in the claim 1, **characterized in that** the personal token (15) implements a Rights Issuer server which generates Rights Objects based on other initial Rights Objects or authorization data that were delivered to it from a remote Rights Issuer server (20) or authorization server.

13. The method as recited in claim 5 **characterized in that** the personal token (15) implements a Rights Issuer server, said Rights Issuer server of the personal token (15) as well as a remote Rights Issuer or authorization server being able to mutually authenticate each other end to end.

14. The method as recited in the claim 1 **characterized in that** the personal token (15) implements a Rights Issuer server which manages counter based Rights Objects by delivering several Rights Objects, each enabling only one execution on the rendering device (10), and then decrementing a counter in the personal token (15) upon the delivery of each Rights Object to the rendering device (10), until the counter is set to zero.

15. The method as recited in the claim 1, **characterized in that** the personal token (15) implements a Rights Issuer server which delivers a series of Rights Objects to the rendering device (10), each being valid for a limited time frame.

16. The method as recited in claim 1, **characterized in that** the personal token (15) implements a Rights Issuer server which delivers Rights Objects, which Rights objects indicate that another Rights Object can be subsequently delivered after the expiration of the delivered one.

17. The method as recited in the claim 1, **characterized in that** the personal token (15) implements a Rights Issuer server which enables a secure backup of all its Rights Objects on a local PC or a remote server by exporting this data encrypted by credentials that are securely stored in the personal token (15).

18. The method as recited in the claim 1, **characterized in that** the personal token (15) implements a Rights Issuer server which simultaneously delivers Rights Objects to several rendering devices if a wired or wireless link can be established with all at the same time.

19. The method as recited in the claim 1 **characterized in that** the personal token (15) is a smart card.

20. The method as recited in the claim 1 **characterized in that** the personal token (15) is a Multi Media Memory card.

21. The method as recited in the claim 1 **characterized in that** the rendering device (10) is a mobile phone.

22. The method as recited in the claim 1 **characterized in that** the rendering device (10) is a PDA.

23. The method as recited in the claim 1 **characterized in that** the rendering device (10) is a PC.

24. The method as recited in the claim 1 **characterized in that** the rendering device (10) is a consumer electronic device with multimedia rendering capabilities and possibly networking capabilities.

25. A personal token (15) for access to a telecommunication network, such as a SIM card, said personal token (15) storing an entity which is able to deliver to a rendering device (10) associated with said token a rights objects, said rights object comprising at least a decryption key and at least a usage right for the digital content.

26. The personal token (15) as recited in claim 25, **characterized in that** the personal token (15) is an authentication token for a mobile telephony network.

27. The personal token (15) as recited in claim 25, **characterized in that** the personal token (15) stores and runs a set of instructions for downloading an encrypted traffic key from a remote server together with a digital content encrypted with said traffic key, decrypting the traffic key in the personal token (15) and delivering the decrypted traffic key to the rendering device (10) once said traffic key has been decrypted, as the decrypting key of the content.

28. The personal token (15) as recited in claim 25, **characterized in that** the personal token (15) implements several DRM sever protocols so as to deliver rights objects pertaining to a different DRM standards which correspond to different types of DRM compliant rendering devices,

29. The personal token (15) as recited in claim 25, **characterized in that** the personal token (15) stores a plurality of rights objects, each pertaining to a different DRM protocol which corresponds to a different type of DRM compliant rendering device (10).

30. The personal token (15) as recited in claim 25, **characterized in that** the personal token (15) stores a transcribing entity which transcribes a rights object in anyone of a plurality of DRM protocols before such rights object is transmitted to the rendering device (10).

31. The personal token (15) as recited in claim 25, **characterized in that** the Rights Issuer server implemented in the personal token (15) authenticates the rendering device (10) as pertaining to a pre-established list of rendering devices before delivering a rights object to said rendering device (10).

32. The personal token (15) as recited in claim 25; **characterized in that** the personal token (15) is a smart card.
